# EUROPEAN PATENT APPLICATION

(11) **EP 3 042 868 A1**
(43) Date of publication of application: **13.07.2016**
(21) Application number: 14842279.3
(22) Date of filing: 04.09.2014
(51) Int. Cl.: B65G 1/12, B65G 57/30, B65G 37/02, B65D 90/00, B65D 90/18

(54) **EQUIPMENT AND METHOD FOR MOVING CONTAINERS**

(30) Priority: 05.09.2013 BR 102013022724
(71) Applicant: Cifelli, Carmine, 02914-050 São Paulo (BR)
(72) Inventor: Cifelli, Carmine, 02914-050 São Paulo (BR)
(74) Representative: Capitán García, Maria Nuria
(86) International application number: PCT/BR2014/000309
(87) International publication number: WO 2015/031969

(57) **Abstract**

The system proposed consists in a new template for moving containers in port terminals based on the stacking of containers from the bottom to the top. Such stacking occurs by using a lifting system specifically designed for such purpose and by supporting the containers stack on fixed structural foundations at a determined height from the ground.

## Description

The present invention has the aim to store and arrange the containers in port terminals, in a way to optimize the space and the processes of moving the load. The system, as a whole, comprises a lifting system (3), a set of fixed lifted foundations (2), movable interface platforms (5) in which each container will be supported and a rotation system (4) for horizontal moving.

In a flat ground area, fixed structural foundations will be installed, which will maintain the containers lifted at a determined height, in a way to allow other containers to horizontally move under them.

At ground level, the containers will be placed on movable interface platforms (5) in a defined receiving position. Thus, they will be able to be horizontally conducted by the rotation system (4) into pre-determined positions. From that point, one-to-one, the containers will be able to be lifted to the first level of the system through the lift (3) and, there, they will be supported by the fixed lifted foundation (2). A container which is placed under another that has been previously lifted can be placed on that same position by lifting the container which was there to the second level of the system. In the same way, a third container can take the position of the second one, putting the first one on the third level and, so on consecutively. This represents a container stacking from the bottom to the top, which will be performed automatically and allows a constant repositioning of the containers during the movements. The system can be controlled to rearrange the stacks in accordance with the updates on the schedule of entries and releases of the containers in the terminal through trucks and shipping and landing through ships.

Nowadays, the most well-stablished container moving template in terminals consists on the coordinated action of some equipment such as gantries for containers, portainers, stake trucks, cranes and containers forklifts. The containers are stacked in a determined number of levels in queues arranged side-by-side, forming separated sets through operation halls.

The operational capacity of the traditional terminals is limited due to logical operational restrictions for an optimized relationship between the number of stacking levels, number of queues arranged side-by-side, length of these queues and number of moving equipment involved on the operation and occupied area. Many times, the movement of the load in the port terminals becomes the bottleneck on the importation and exportation processes, demanding a lot of financial resources.

The system disclosed on this document firstly allows the container courtyard compaction by eliminating the need of halls between the queues of containers stacks.

It also allows a continuous and automatic rearrangement of the containers, with briefer operations and in a smaller number. The increase of the number of possible combinations of these operations allows a potentiation of the use of the optimization resources by computational intelligence.

All this factors, when summed, result in an operational viability for a greater number of containers stacked on a stack and, thus, a greater storage capacity in the same courtyard area of the conventional system.

Once this system is broadly applied, the decrease of the space and time for receiving and removing containers will also decrease operational costs for moving and can also increase the economic efficiency of the international market.

The description that follows and the figures associated to it, by way of example and not being limitative, will make it better to comprehend the invention.
Figure 1 - perspective of the containers stacking foundation;
Figure 2 - perspective of the stacking foundation loaded with containers;
Figure 3 - perspective of a structural unit of the stacking foundation with a container on the top of it;
Figure 4 - perspective of a structural unit of the stacking foundation with a container under it;
Figure 5 - perspective of the lift;
Figure 6 - perspective of a lifting operation of a container;
Figure 7 - perspective of the lift in a compacted position for horizontal displacement;
Figure 8 - perspective of the structural unit of the stacking foundation in a closed position;
Figure 9 - perspective of the structural unit of the stacking foundation in an open position;
Figure 10 - perspective of the horizontal displacement system with the active longitudinal line;
Figure 11 - perspective of the horizontal displacement system with the active cross-sectional line;
Figure 12 - perspective of the movable platform of the containers seen from the top to the bottom;
Figure 13 - perspective of the movable platform of the containers seen from the bottom to the top;
Figure 14 - stacking operation of a container;
Figure 15 - release operation of a container.

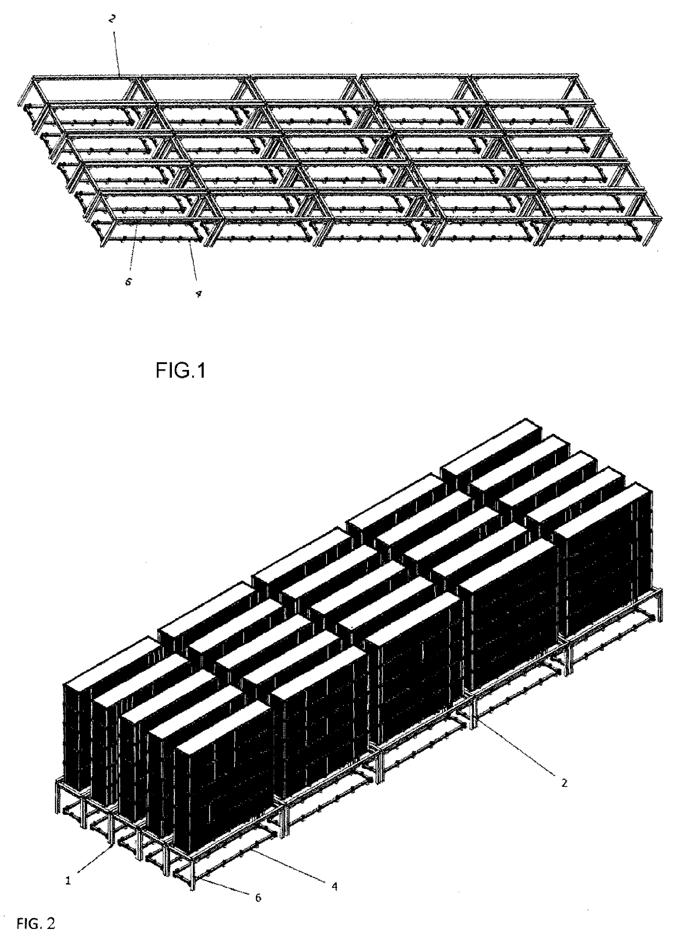

Figure 1 shows the courtyard with the stacking foundation (2) installed.
Figure 2 shows the courtyard with the stacking foundation (2) loaded with containers.

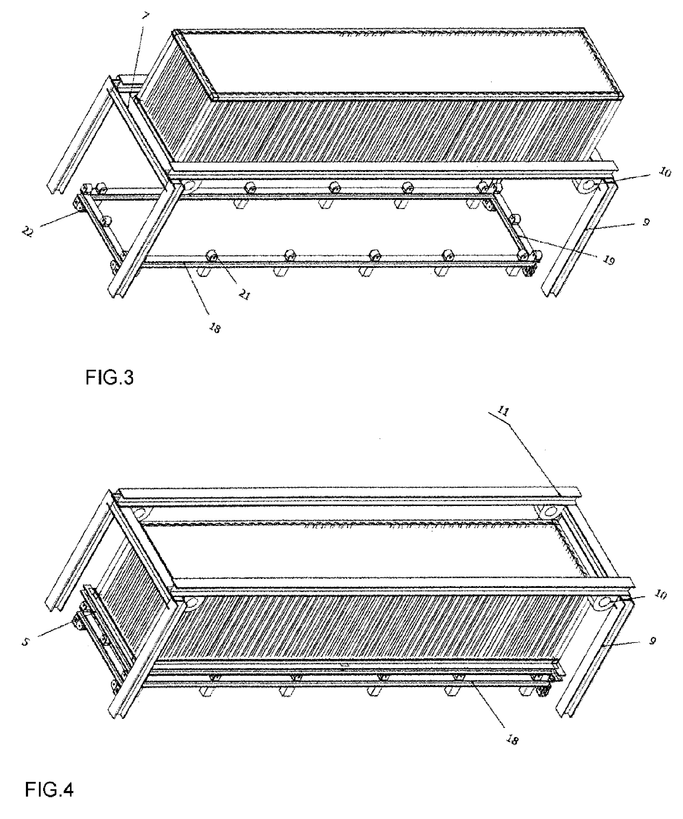

Figure 3 shows a structural unit (6) of the stacking foundation (2) with a container on top, supported on a movable platform (5) which is supported on the movable beam (11) through the supporting eyes (10).
Figure 4 shows a structural unit (6) of the stacking foundation (2) with a container supported on a movable platform (5) on the horizontal displacement system (4).

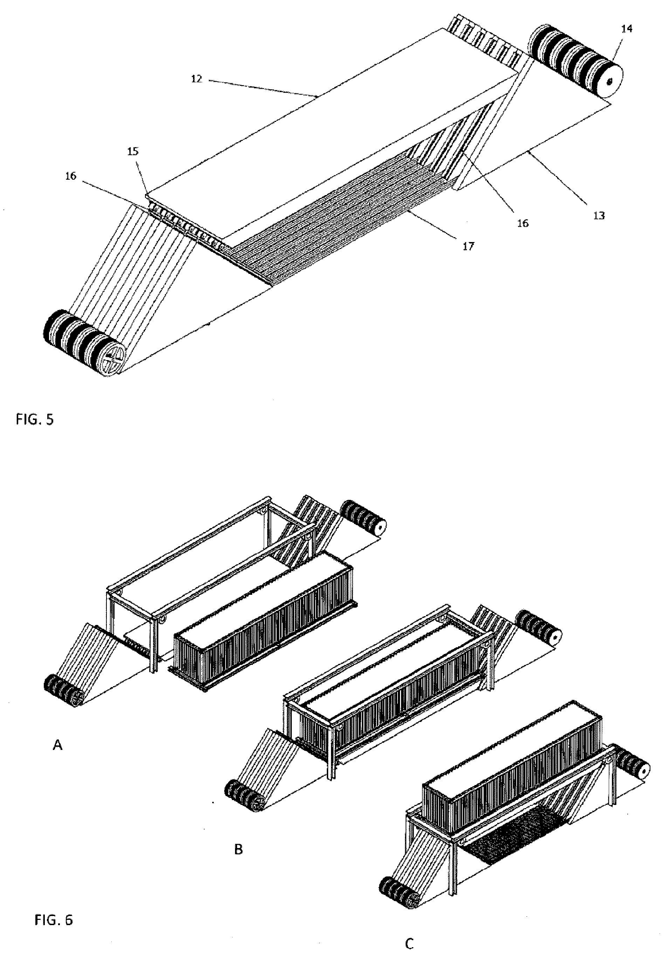

Figure 5 shows the lifting system (3) formed by triangular prism-shaped cars (13) which, during the lifting, get close resulting in the lifting of the lifting platform (12), which is located between the two cars (13). The lifting platform (12) comprises rotations (15) which slide through the tracks (16) located on the sloped plane of the cars (13). The approach will occur by the traction of the steel cable (17), which connects the two cars (13) and roll up on the barrels (14). The spacing will occur by the action of the own weight of the lifting platform (12). The lift (3) moves independently to any position of the system through the horizontal displacement system (4).
Figure 6 shows 3 lifting operation steps of a container.

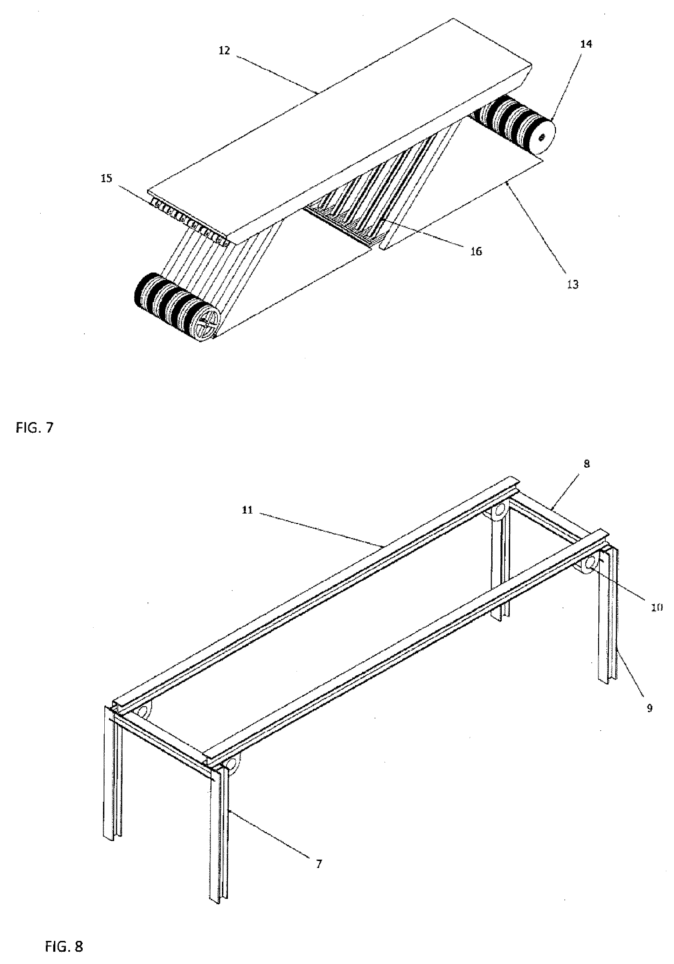

Figure 7 shows the lift (3) in a compacted configuration which will allow its displacement through all the equipment (1) by the horizontal displacement system (4).
Figure 8 shows the structural unit (6) of the stacking foundation (2) in a closed position, when it will act as an elevated support for the containers stack. The fixed structure (6) is formed by the columns (9), fixed beams (8) and movable beams (11), which will have the function of locking the stacks when lifted and also allowing their release during the containers release operations.

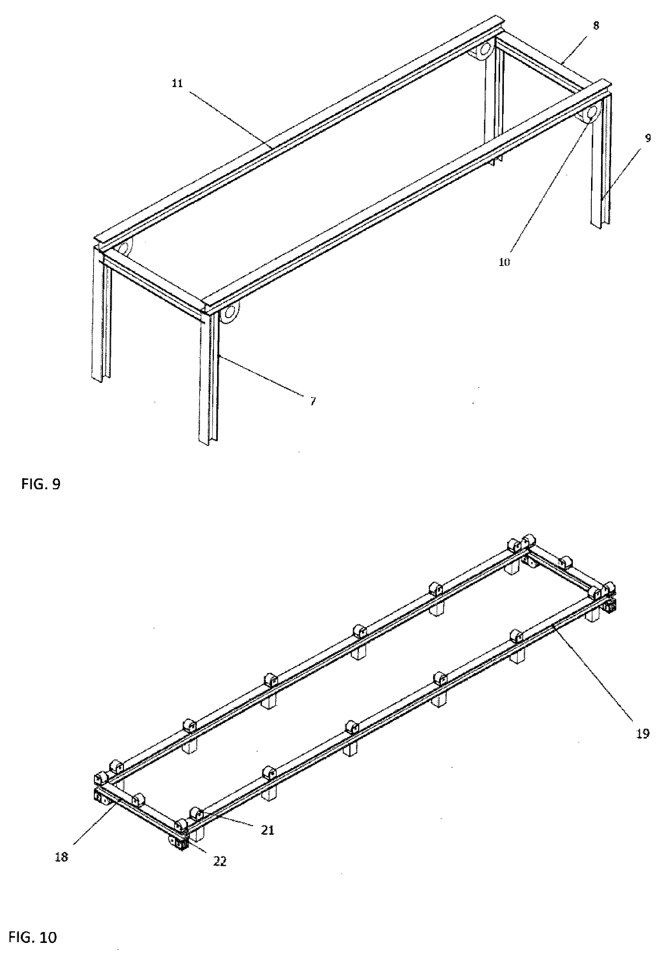

Figure 9 shows the structural unit (6) in an open position.
Figure 10 shows a unit of the horizontal displacement system (20), with active longitudinal rotation lines (19). The system is formed by fixed longitudinal rotation lines (19) and by cross-sectional rotation lines (18) which height can be regulated. The lifting of the cross-sectional lines level occurs by the mechanism for changing the active line (22). The rotations (21) are power-driven, wherein the velocity and the sense of the rotation are controlled. When the cross-sectional rotation line (18) is leveled above the longitudinal rotation line (19), the cross-sectional line (18) will be the active one and the container or the lift (3) will move in a cross-sectional direction. When the cross-sectional rotation line (18) is leveled under the longitudinal rotation line (19), the longitudinal rotation line (19) will be the active one and the container or the lift (3) will move in a longitudinal direction.

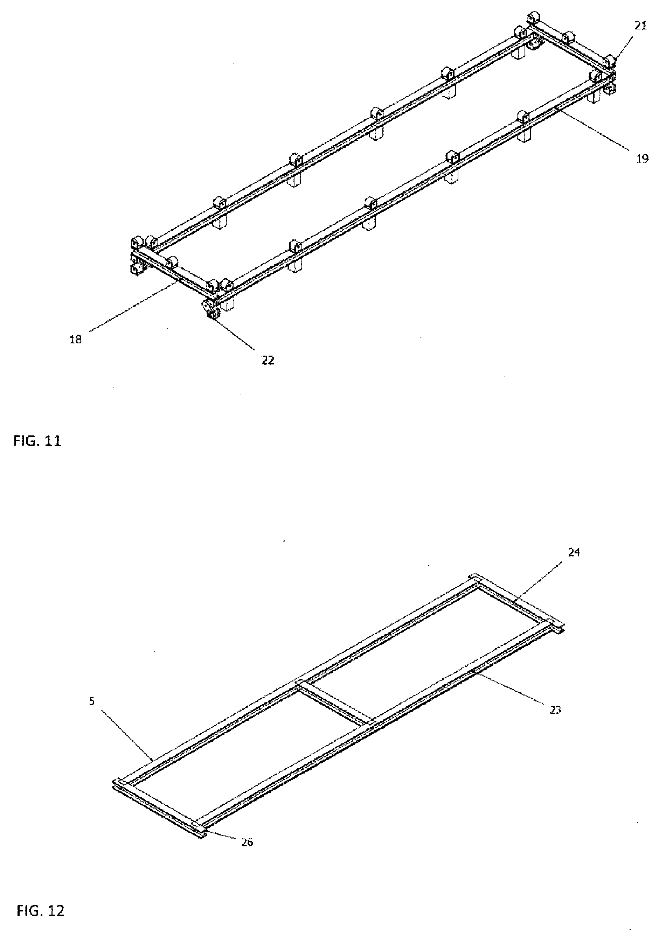

Figure 11 shows a unit of the horizontal moving system (20) with active cross-sectional rotation lines (18).
Figure 12 shows the movable platform (5) of the containers formed by two cross-sectional beams (24) e longitudinal beams (23). The platform has the function of supporting the container during horizontal movement and during stacking. It presents cross-sectional and longitudinal tracks (25) that will allow the displacement through the horizontal moving system (4). It also presents supports (26) that will allow its fastening in the beams (11) of the structural units (6).

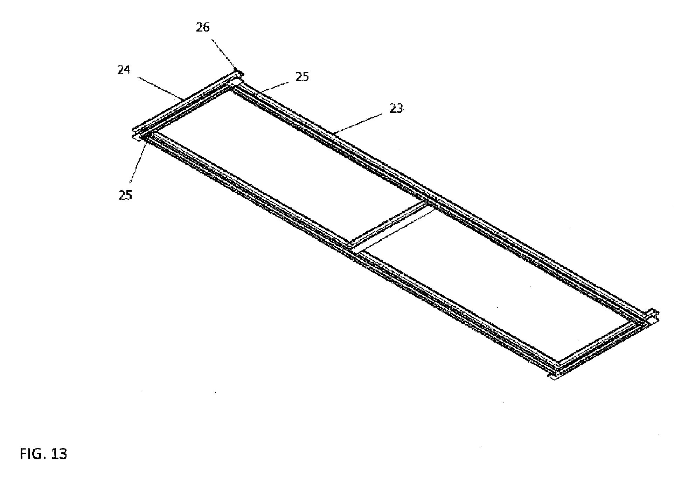

Figure 13 shows the movable platform (5) of the containers seen from the bottom to the top.

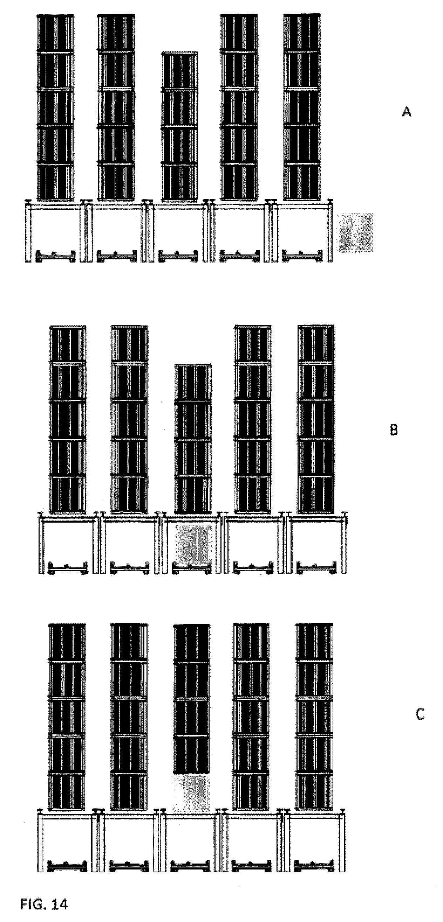

Figure 14 shows the operation steps for the receiving of a container into a stack.

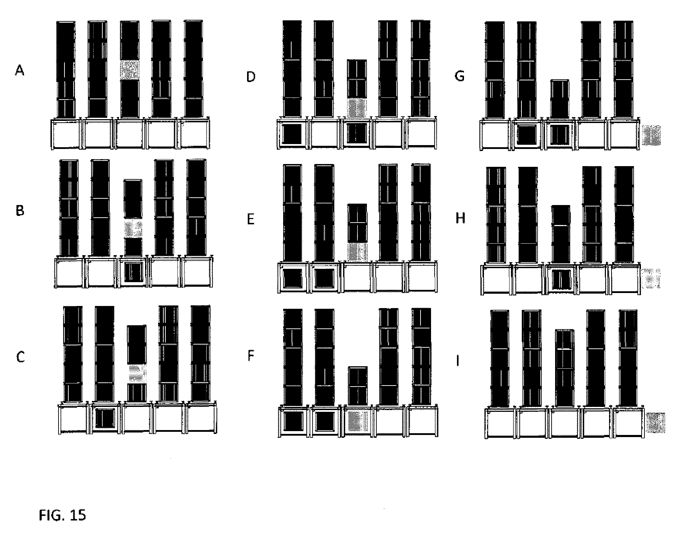

Figure 15 shows the operation steps for the release of a container from a stack.

## Claims

1. Equipment for moving containers **characterized by** the fact that it comprises:
A foundation for stacking containers (2), comprising structural units (6) duly lined longitudinally e cross-sectionally;
Movable lifts (3) formed by a couple of triangular prism-shaped structures (13) and internal lifting platforms (12);
A horizontal displacement system (4) formed by units (20) installed at ground level;
Movable platforms (5) for containers comprising a support framework for a container endowed with tracks (25) on cross-sectional and longitudinal directions and supports (26) formed by the bottom of the transversal beams (24).

2. Equipment for moving containers, according to claim 1, **characterized by** the fact that each structural unit (6) be constituted by power-driven movable support beams (11) which will maintain containers stack hanging over two beams (7) when on a closed position or will allow the lowering of the containers stack when on the open position.

3. Equipment for moving containers, according to claim 1, **characterized by** the fact that the locks of the structural unit (6) comprise two columns (9) and one beam (8).

4. Equipment for moving containers, according to claim 1, **characterized by** the fact that the movable lifts (3) are formed by one couple of triangular prism-shaped structures (13) that moves in opposite directions on longitudinal direction of the horizontal chart.

5. Equipment for moving containers, according to claim 1, **characterized by** the fact that the movable lifts (3) is moved by the horizontal displacement system (4) in cross-sectional and longitudinal directions to any position of the equipment (1).

6. Equipment for moving containers, according to claim 1, **characterized by** the fact that the lifting of the lifting platform (12) of the lift (3) occurs due to the narrowing on it, caused by the approach of the couple of triangular prism-shaped structures (13).

7. Equipment for moving containers, according to claim 1, **characterized by** the fact that the lifting of the lifting platform (12) of the lift (3) presents an amplitude corresponding to a level.

8. Equipment for moving containers, according to claim 1, **characterized by** the fact that the approach of the triangular prism-shaped structures (13) be performed by the traction of the steel wire (17) through the winding of the same on barrels (14).

9. Equipment for moving containers, according to claim 1, **characterized by** the fact that the spacing of the triangular prism-shaped structures (13) occur due to the action of the own weight of the lifting platform (12) of the lift (3).

10. Equipment for moving containers, according to claim 1, **characterized by** the fact that the movable platform (5) of the containers comprises a framework formed by longitudinal beams (23) and transversal beams (24) with spare bottoms for the support on the eyes (10) of the movable beams of the structural unit (6).

11. Equipment for moving containers, according to claim 1, **characterized by** the fact that the horizontal displacement system comprises power-driven rotations (21) lined in two parallels lines on the longitudinal direction (19) and in other two parallels lines on the cross-sectional direction (18).

12. Equipment for moving containers, according to claim 1, **characterized by** the fact that the cross-sectional rotation lines (18) of the unit of the horizontal displacement system (20) presents a height that can be regulated and adjusted to be on top, under or at the same level of the longitudinal rotation lines (19).

13. Equipment for moving containers, according to claim 1, **characterized by** the fact that the rotations (21) of the horizontal displacement system (4) presents its rotations with controlled rotation speed in both directions.

14. Method for stacking containers, performed together with the equipment disclosed on claims 1 to 13, **characterized by** the fact that it comprises the following steps:
a) Horizontal displacement of the lift (3) up to the position of the stack of interest of the container to be stacked;
b) Horizontal displacement of the container of the position of the entry up to the position of the stack of interest performed at ground level from the horizontal displacement system (4);
c) Stacking from the bottom to the top of the container through the lift (3) and the locks system (11) of the structural unit (6).

15. Method for stacking containers, according to claim 14, **characterized by** the fact that the horizontal displacement of the container and of the lift (3) consists on their displacement on the horizontal displacement system (4) up to the positions of interest through the movement for the rotation of the power-driven rotations (21) and direction changes by the driving of the active line change mechanisms (22).

16. Method for stacking containers, according to claim 14, **characterized by** the fact that the stacking comprises the following steps:
a) Positioning of the movable platform (5) of the container on top of the lifting platform (12) of the lift (3);
b) Initial lifting of the container up to the contact with the platform (5) of the upper container;
c) Opening of the locks (11);
d) up to the level of the supports (26) of the platform (5) of the container with the eyes (10) of the movable beam (11);
e) Closing of the locks (11);
f) Lowering of the lifting platform (12) of the lift (3).

17. Method for removing the containers from the stacks, performed together with the equipment disclosed on claims 1 to 13, **characterized by** the fact that it comprises the following steps:
a) Horizontal displacement of the lift (3) up to the position of the container stack to be removed;
b) Sequence of the lowering operations of the containers positioned under the container to be released from the stack;
c) Lowering of the container to be withdrawn from the stack;
d) Horizontal displacement of the container performed at ground level by the horizontal displacement system (4) up to the release position at the bottom of the equipment (1);
e) Re-stacking of the containers that were under the container to be released before the beginning of the process.

18. Method for removing the containers from the stacks, according to claim 17, **characterized by** the fact that the horizontal displacement of the container and of the lift consists on their displacements on the horizontal displacement system (4) up to the positions of interest through the movement for the rotation of the power-driven rotations (21) e direction changes by the driving of the active line change mechanisms (22).

19. Method for removing the containers from the stacks, according to claim 17, **characterized by** the fact that the lowering of the containers comprises the following steps:
a) Lifting of the lifting platform (12) of the lift (3) up to the contact with the movable platform of the container (5);
b) Opening of the beams locks (11);
c) Lowering of the containers stack up to the level of the supports (26) of the platform (5) of the container, which is shortly on top of the bottom container, with the eyes (10) of the movable beam (11);
d) Closing of the locks (11);
e) Final lowering of the lower container;
f) Release of the container of the lift (3) by the horizontal displacement system (4).

20. Method for removing the containers from the stacks, according to claim 17, **characterized by** the fact that the re-stacking of the containers comprises the repetition of the following steps for each container to be re-stacked:
a) Positioning of the container on top of the movable platform (12) of the lift (3);
b) Initial lifting of the container up to the contact with the platform (5) of the upper container;
c) Opening of the locks (11);
d) Final lifting of the container up to the level of the supports (26) of the platform (5) of the container with the eyes (10) of the movable beam (11);
e) Closing of the locks (11);
f) Lowering of the lifting platform (12) of the lift (3).

21. Method for rearranging the containers, performed together with the equipment disclosed on claims 1 to 13, **characterized by** the fact that it comprises the following steps:
a) Lowering of the containers and repositioning on the stack by a sequence of operations for lowering the containers;
b) Horizontal displacement of the containers performed at ground level by the horizontal displacement system (4) up to the position of the stack of interest;
c) Lifting of the containers in their respective stacks of interest by the lift (3).

22. Method for rearranging the containers, according to claim 21, **characterized by** the fact that the lowering of the containers comprises the repetition of the following steps for each container to be repositioned:
a) Positioning of the lift (3) under the container stack to be lowered;
b) Lifting of the lifting platform (12) of the lift (3) up to the contact with the movable platform of the container (5);
c) Opening of the beams locks (11);
d) Lowering of the containers stack up to the level of the supports (26) of the platform (5) of the container, which is shortly on top of the lower container, with the eyes (10) of the movable beam (11);
e) Closing of the locks (11);
f) Final lowering of the lower container;
g) Release of the container of the lift (3) by the horizontal displacement system (4).

23. Method for rearranging the containers, according to claim 21, **characterized by** the fact that the horizontal displacement of the container and of the lift (3) consists on their displacements on the horizontal displacement system (4) up to the positions of interest through the movement for the rotation of the power-driven rotations (21) e direction changes by the driving of the active line change mechanisms (22).

24. Method for rearranging the containers, according to claim 21, **characterized by** the fact that the re-stacking of the containers comprises the repetition of the following steps for each container to be re-stacked:
a) Positioning of the lift (3) under the container stack which will be lifted;
b) Positioning of the container on top of the lifting platform (12) of the lift (3);
c) Initial lifting of the container up to the contact with the movable platform (5) of the upper container;
d) Opening of the locks (11);
e) Final lifting of the container up to the level of the supports (26) of the platform (5) of the container with the eyes (10) of the movable beam (11);
f) Closing of the locks (11);
g) Lowering of the lifting platform (12) of the lift (3).
